# EUROPEAN PATENT APPLICATION

(11) **EP 0 937 575 A1**
(43) Date of publication of application: **25.08.1999**
(21) Application number: 99301038.8
(22) Date of filing: 12.02.1999
(51) Int. Cl.: B32B 15/01, C22C 16/00, G21C 7/04, G21C 3/324

(54) **Composite member and fuel assembly using the same**

(30) Priority: 12.02.1998 JP 2950398
(71) Applicant: HITACHI, LTD., Chiyoda-ku, Tokyo (JP)
(72) Inventor: Fujieda, Tadashi, Hitachi-shi, Ibaraki 319-1225 (JP); Tomida, Kazuo, 40237 Düsseldorf (DE); Inagaki, Masahisa, Hitachi-shi, Ibaraki 319-1225 (JP); Nakajima, Junjiro, Hitachi-shi, Ibaraki 317-0066 (JP); Ito, Kenichi, Hitachinaka-shi, Ibaraki 312-0047 (JP)
(74) Representative: Paget, Hugh Charles Edward

(57) **Abstract**

Disclosed are a composite member capable of suitably suppressing the excess reactivity without addition of a neutron absorbing material or burnable poison in fuel rods by use of a Zr-Gd alloy improved in characteristics of pure Gd as the neutron absorbing material, and a fuel assembly, cladding tube, spacer, water rod, channel box, and control rod using the composite member. In particular, disclosed is a fuel assembly in which at least one of a cladding tube, spacer, water rod, channel box, and control rod employs a composite member which is composed of a member made from a Zr-Gd alloy containing 20 wt% or more of Gd and a member made from a Zr alloy higher in corrosion resistance than the Zr-Gd alloy, wherein the member made from the Zr-Gd alloy is incorporated in the member made from the Zr alloy.

## Description

### BACKGROUND OF THE INVENTION

The present invention relates to a new alloy, a composite member of the alloy, and a fuel assembly for a nuclear plant employing the composite member, and particularly to a composite member intended to suppress a power peaking for reducing a limitation in terms of nuclear thermal energy, thereby improving the nuclear fuel economy, and to applications of the composite member.

A nuclear reactor is designed such that a reactor core previously has an excess reactivity for allowing operation of the nuclear reactor for a specific period of time. To suppress such an excess reactivity, there is generally used a fuel rod incorporated with a burnable poison (BP) represented by gadolinium (Gd). Even for a reactor core employing a MOX (Mixed Oxide) fuel, a plurality of fuel rods, in each of which a burnable poison is mixed with a fuel, are employed for suppressing the excess reactivity of the reactor core.

A neutron absorption cross-section is generally dependent on the inverse of a neutron energy (v). In other words, the smaller the energy of neutrons, the more the neutrons are absorbed. For this reason, when a burnable poison is located in a fuel system having a softer neutron energy spectrum, that is, containing thermal neutrons in a larger quantity, the neutron absorption dose of the burnable poison becomes larger. As a result, when a burnable poison is located in a reactor core employing a MOX fuel, the reactivity suppressing effect of the burnable poison becomes smaller, and accordingly, if it is intended to obtain, in the MOX-type reactor core, the reactivity suppressing effect comparable to that in a uranium-type reactor core, the number of fuel rods, each being mixed with a burnable poison, used in the MOX-type reactor core must be increased. In this regard, a technique disclosed in Japanese Patent Laid-open No. Sho. 60-146185 is based on the fact that the outer peripheral portion of a fuel assembly near a water gap has thermal neutrons in a large quantity and has a soft neutron spectrum, and is configured such that gadolinia containing fuel rods are arranged in the above region to enhance the reactivity worth of gadolinia, thereby reducing the number of the gadolinia containing fuel rods used. This is effective to increase the plutonium inventory of the fuel assembly and also to reduce the kinds of fuel pellets used. This technique, however, fails to completely eliminate the burnable poison from the fuel in the fuel assembly, and therefore, such a technique is insufficient to achieve the purpose of increasing the plutonium inventory.

A technique disclosed in Japanese Patent Laid-open No. Sho 59-72087 is intended to eliminate the necessity of addition of a burnable poison in fuel pellets and of adjustment of enrichment of uranium by removably attaching a reactivity control member on the outer periphery of a fuel channel box of a fuel assembly. According to this technique, the reactivity control member is represented by a member made from a neutron absorbing material such as a stainless steel or a zirconium alloy; a member made from a stainless steel in which a burnable poison such as gadolinium, silver, indium, boron, cadmium or hafnium is dispersed in the form of a single element or a compound thereof, or a member made from the above burnable poison or a compound thereof, which is covered with a stainless steel member; a member made from a reflective material such as beryllium covered with a stainless steel member; or a member made from the above neutron poison, reflective material, natural uranium, or depleted uranium, which is sandwiched between stainless steel members, followed by coextrusion treatment such as rolling.

The above technique, however, has problems that a gap formed between the channel box and the reactivity control member tends to cause crevice corrosion or galvanic corrosion, and that the reactivity control member in direct-contact with core water is liable to be corroded.

To cope with the above problems, Japanese Patent Laid-open No. Hei 6-342091 discloses a technique in which a moderator rod (water rod) arranged at the center of a fuel assembly is of a double tube structure having outer and inner tubes, wherein a burnable poison is filled therebetween.

As described above, a fuel used for a nuclear reactor is mixed with a burnable poison for suppressing the excess reactivity of a reactor core at the initial stage of operation of the nuclear reactor.

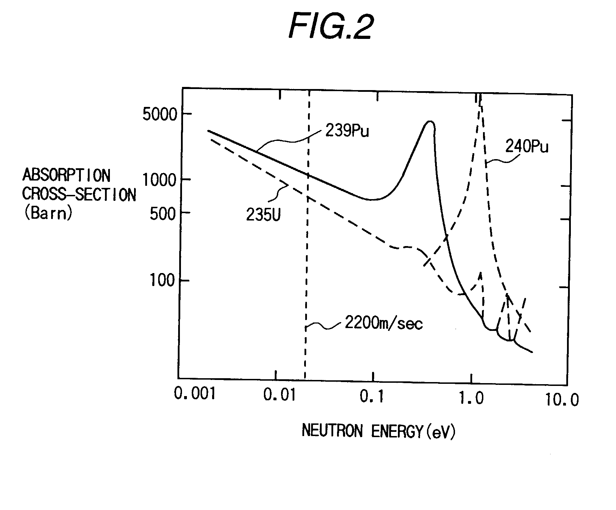

Fig. 2 is a diagram showing the dependence of a neutron energy on a neutron absorption cross-section of plutonium as compared with that of uranium. As shown in Fig. 2, the neutron absorption dose of plutonium is larger than that of uranium. Accordingly, for a light-water reactor using plutonium, the thermal neutron absorption dose of a material for a control rod or a reactivity suppressing material such as a burnable poison becomes smaller, to thereby reduce the control rod worth and the reactivity worth of a burnable poison in a reactor core in which a MOX-type fuel assembly is charged. Such a reactor core, in which the MOX-type fuel assembly is charged, thus requires the increased number of fuel rods each containing a burnable poison. This means that the plutonium inventory per one fuel assembly is reduced, and that the number of fuel assemblies prepared for consumption of plutonium in the same quantity is increased, to raise the fuel production cost and fuel transportation cost. The technique disclosed in the above document, Japanese Patent Laid-open No. Sho 59-72087 has, as described above, the problems that a gap formed between the channel box and the reactivity control member tends to cause a crevice corrosion or galvanic corrosion, and the reactivity control member in direct-contact with reactor core water is liable to be corroded.

To hold the integrity of a fuel for a nuclear reactor, the fuel must be designed to ensure a suitable local peaking factor over the service life of the fuel for keeping an operational limitation in terms of nuclear thermal energy. In a fuel for a boiling water-type nuclear reactor, there is a tendency that a thermal neutron flux becomes relatively higher at the outer peripheral portion of a fuel assembly, that is, near a water gap, and thereby the power of fuel rods arranged at the outer peripheral portion becomes higher. Accordingly, to suppress the local peaking factor of the fuel rods arranged at the outer peripheral portion of the fuel assembly, the fuel must be designed with kinds of enrichment of fuel pellets increased. In manufacture of a MOX fuel, however, the change in kind of enrichment of fuel pellets causes a problem. Since fuel pellets are compacted in a fully sealed vessel, it takes a lot of time to clean a globe box for changing the enrichment of plutonium as compared with the case of changing the enrichment of uranium. This results in a large reduction in workability upon manufacture of the MOX fuel. That is to say, with the kinds of enrichment of plutonium increased, the number of clean-up becomes large and thereby the fuel compacting cost is raised. In the technique disclosed in the above document, Japanese Patent Laid-open No. Hei. 6-342091, the burnable poison arranged at the central portion of the fuel assembly fails to suppress the output peaking of fuel rods arranged at the outer periphery of the fuel assembly at which a thermal neutron flux is relatively high.

Gadolinium (Gd) is a very active metal, and is significantly corroded, particularly, in high temperature water. Accordingly, when a member made from Gd is employed for a reactivity control member, it must be perfectly sealed in the form of a composite member having a sandwich structure of zirconium (Zr) alloy/Gd/Zr alloy members. For such a composite member including the pure Gd member sandwiched between the Zr alloy members, however, a thermal stress occurs at each junction interface between the pure Gd member and the Zr alloy member due to a difference in thermal expansion coefficient between the pure Gd member and the Zr alloy member, tending to cause peeling of both the members at the interface. Also since Gd is lower in mechanical strength than a Zr alloy, the above composite member containing the pure Gd member is low in mechanical strength.

Since Gd is low in ductility at room temperature as compared with a Zr alloy, it is less formable. To minimize the problems resulting from a difference in characteristics between both the materials and improve the manufacturing ability, Gd must be used in the form of an alloy in which a suitable amount of Zr is added to Gd. Further, it is required to establish a process of suitably manufacturing a Zr-containing Gd alloy plate.

### SUMMARY OF THE INVENTION

An object of the present invention is to provide a composite member capable of suitably suppressing the excess reactivity without addition of a neutron absorbing material or burnable poison in fuel rods by use of a zirconium-gadolinium alloy improved in characteristics of pure gadolinium as the neutron absorbing material, and a fuel assembly, cladding tube, spacer, water rod, channel box, and control rod using the composite member.

To achieve the above object, according to the present invention, there is provided a composite member including a member made from a zirconium-gadolinium alloy containing gadolinium in an amount of 20 wt% or more and a member made from a zirconium alloy higher in corrosion resistance than the zirconium-gadolinium alloy, wherein the member made from the zirconium-gadolinium alloy is covered with the member made from the zirconium alloy.

According to the present invention, there is also provided a composite member including a member made from a zirconium-gadolinium alloy containing gadolinium in an amount of 20 to 99 wt% and a member made from a zirconium alloy higher in corrosion resistance than the zirconium-gadolinium alloy, wherein the member made from the zirconium-gadolinium alloy is incorporated in the member made from the zirconium alloy.

According to the present invention, there is also provided a composite member including a zirconium-gadolinium alloy having a tensile strength in a range of 92 MPa or more at 288°C or in a range of 200 MPa or more at room temperature and a member made from a zirconium alloy higher in corrosion resistance than the zirconium-gadolinium alloy, wherein the member made from the zirconium-gadolinium alloy is covered with the member made from the zirconium alloy.

According to the present invention, there is also provided a composite member including a member made from a zirconium-gadolinium alloy having an average thermal expansion coefficient in a range of 0.16 to 0.18% at a temperature ranging from room temperature to 300°C and a member made from a zirconium alloy higher in corrosion resistance than the zirconium-gadolinium alloy, wherein the member made from the zirconium-gadolinium alloy is covered with the member made from the zirconium alloy.

According to the present invention, there is also provided a fuel assembly including: a plurality of fuel rods each being composed of a cladding tube filled with a nuclear fuel; a spacer for holding the fuel rods at specific positions; an upper tie plate and a lower tie plate for supporting upper and lower ends of the fuel rods, respectively; a water rod arranged in the spacer; and a channel box for integrally collecting the fuel rods, spacer, tie plates, and water rod and covering the outer peripheries thereof; wherein at least one of the cladding tube, spacer, water rod, and channel box includes a composite member including a member made from a zirconium-gadolinium alloy containing gadolinium in an amount of 20 wt% or more and a member made from a zirconium alloy higher in corrosion resistance than the zirconium-gadolinium alloy, wherein the member made from the zirconium-gadolinium alloy is incorporated in the member made from zirconium alloy.

According to the present invention, there is also provided at least one of a fuel cladding tube used for a nuclear reactor, a spacer used for a nuclear reactor, a water rod for a nuclear reactor, a channel box, and a control rod, including a composite member including a member made from a zirconium-gadolinium alloy and a member made from a zirconium alloy higher in corrosion resistance than the zirconium-gadolinium alloy, wherein the member made from the zirconium-gadolinium alloy is incorporated in the member made from the zirconium alloy.

According to the present invention, there is also provided a plate of a gadolinium alloy in which crystal grains of zirconium are dispersed.

Annealing performed in an inert gas atmosphere or vacuum at a temperature of 600 to 900°C after hot-forging can be omitted.

Cold-rolling at a low reduction ratio of about 10% after hot-rolling and annealing, and the subsequent annealing can be omitted.

Manufacturing steps after hot-forging and annealing, or after hot-rolling and annealing can be omitted, and the hot-forged and annealed or hot-rolled and annealed product can be directly sliced into a specific thickness.

In a process for manufacturing a fuel channel box, a raw material for making the channel box is preferably quenched from a Zr-βphase temperature range at least once.

A nuclear reactor utilizes an energy generated by burning a fissile material represented by uranium 235 charged in fuel rods.

As a fissile material charged in a fuel rod, enriched uranium obtained by enriching natural uranium is generally used. The enriched uranium, typically in a state of enriched uranium oxide, is compacted and sintered into fuel pellets, and the fuel pellets are contained in fuel cladding tubes arranged in a tetragonal grid pattern.

In recent years, a plutonium burning in thermal neutron reactor utilization plan has been proceeded. The plan is intended to recycle plutonium in the spent uranium fuel having been taken from a light-water reactor again into a light-water reactor. To be more specific, as a fuel changed in a light-water reactor, there is used a MOX (mixed oxide) type fuel assembly in which part or most of uranium fuel rods in a uranium-type fuel assembly are replaced with MOX fuel rods each containing enriched plutonium. At this time, it may be desirable that characteristics of the MOX-type fuel assembly be similar to those of a uranium-type fuel assembly. Also since the design in uranium fuel is directed toward the high burn-up, the MOX fuel is also preferably designed to attain further enriched plutonium, that is, the charged amount of plutonium per fuel assembly is made as large as possible. However, if the amount of plutonium charged in the MOX-type fuel assembly is increased, there occurs a difference in core characteristic between the uranium-type reactor core and the MOX-type reactor core because of a difference in nuclear characteristic between uranium and plutonium. That is to say, since the thermal neutron absorption cross-section of a fissile material such as Pu-239 or Pu-241 is larger than that of U-235 and also the neutron resonance absorption of Pu-240 is large, the neutron flux spectrum of the MOX fuel becomes harder than that of the uranium fuel, to thereby reduce the neutron moderating effect.

In view of the foregoing, to suitably suppress the excess reactivity without mixing a neutron absorbing material or burnable poison into fuel pellets of a MOX-type fuel assembly, the present invention provides a method of incorporating a burnable poison in a fuel member, such as a channel box or a fuel rod, which members are made from a Zr alloy. Preferably, the burnable poison may be incorporated in the channel box for suppressing the power peaking at a peripheral portion of a fuel assembly, and gadolinium having the largest effect of controlling the resistivity at the initial stage of operation of nuclear reactor may be suitable to the burnable poison.

The crystal grain size of a zirconium alloy as a main component of the composite member of the present invention is preferably in a range of 70 to 500 µm, more preferably, 100 to 500 µm.

A zirconium alloy used for the composite member of the present invention preferably contains 5 wt% or less of Sn, and 5 wt% or less of Nb, the balance being 90 wt% or more (preferably, 95 to 98.5 wt%) of Zr. Each of Sn and Nb is an element necessary for increasing the strength of the zirconium alloy, and the content of Sn must be added in an amount of 3 wt% or less while the content of Nb must be added in an amount of 5 wt% or less. The lower limit of the content of each of Sn and Nb is preferably 0.1 wt%. As a Zircalloy-based alloy, the content of Sn is preferably in a range of 1 to 2 wt%, more preferably, in a range of 1.2 to 1.7 wt%. Such an alloy may further contain 0.5 wt% or less of Fe and 0.5 wt% or less of Cr, and also 0.2 wt% or less of Ni as needed. In particular, the above alloy preferably contains 0.1 to 0.38 wt% of Fe, 0.05 to 0.15 wt% of Cr, and 0.03 to 0.25 wt% of Ni, or preferably contains 0.22 to 0.38 wt% of Fe, 0.05 to 0.15 wt% of Cr, and 0.09 to 0.15 wt% of Ni. In this Zr alloy, the ratio (Fe/Ni) is preferably in a range of 1.3 to 10.

As a zirconium alloy containing Nb, there is preferably used an alloy containing 0.5 to 2 wt% of Nb, the balance being Zr; an alloy containing 2 to 5 wt% of Sn, 0.5 to 1.5 wt% of Nb, and 0.5 to 1.5 wt% of Mo, the balance being Zr; an alloy containing 0.5 to 0.15 wt% of Sn, 0.5 to 1.5 wt% of Nb, and 0.1 to 1.0 wt% of Fe, the balance being Zr; or an alloy containing 0.5 to 5.0 wt% of Nb, 0 to 3.0 wt% of Sn, and 2 wt% or less of at least one kind or two kinds or more of Fe, Ni, Cr, Ta, Pd, Mo and W, the balance being Zr.

A gadolinium alloy contains 0.05 to 0.5 wt% of oxygen, preferably not more than 0.25 wt%, and therefore, it is prepared by vacuum-melting.

Further, according to the present invention, there is provided a fuel assembly including: a plurality of fuel rods each being composed of a cladding tube filled with a nuclear fuel; a spacer for holding the fuel rods at specific positions; an upper tie plate and a lower tie plate for supporting upper and lower ends of the fuel rods, respectively; a water rod arranged in the spacer; and a channel box for integrally collecting the fuel rods, spacer, tie plates, and water rod and covering the outer peripheries thereof; wherein the channel box comprises a composite member including a plurality of strip-shaped members made from a zirconium-gadolinium alloy and a member made from a zirconium alloy higher in corrosion resistance than the zirconium-gadolinium alloy, the plurality of members made from the zirconium-gadolinium alloy being incorporated in the peripheral direction in the member made from the zirconium alloy, wherein the plurality of members made from the zirconium-gadolinium alloy are arranged at a central portion of the channel box over 90% or more of the overall length of the channel box.

The function of the structure in which a member made from a burnable poison or neutron absorbing material composed of a specific alloy is arranged in the channel box along the longitudinal direction will be described below.

In a boiling water type reactor, cooling water in the reactor core flows from bottom to top of the reactor core while being boiled, so that steam bubbles (voids) are distributed in the axial direction of the reactor core, and the amount of the voids tends to be increased toward the upper portion of the core. In a light-water moderated reactor, the density of a moderator (water) controls the nuclear fission reaction, and the reactor is designed such that the larger the density of the moderator, the more the nuclear fission reaction is promoted. Accordingly, in consideration of the power distribution in the axial direction of the core, there is a tendency that the power is larger in the lower portion of the core having a smaller number of voids than in the upper portion having a larger number of voids. In this regard, it becomes effective to axially distribute the amount of a neutron absorbing material or burnable poison present in the channel box such that the amount is larger in the lower region having a larger reactivity than in the upper region and also the amount becomes smaller toward the upper region.

Also, in the upper region in the axial direction, the void ratio is higher, and accordingly, the neutron spectrum becomes harder, with a result that a loss in the burnable poison or neutron absorbing material is smaller in the upper region than in the lower region. Accordingly, by distributing the burnable poison or neutron absorbing material in the axial direction, the loss of the burnable poison or neutron absorbing material proceeds uniformly in both the upper and lower regions.

In the present invention, since a burnable poison is buried in the channel box, it is not in direct-contact with the core water. This makes it possible to prevent occurrence of corrosion of the burnable poison itself, and crevice corrosion and galvanic corrosion between the channel box and the burnable poison.

Further, according to the present invention, since a burnable poison is buried in a raw plate at the step before formation of a channel box, it is possible to form a channel box having a good appearance from which the burnable poison is not exposed, to easily manufacture a channel box buried with a burnable poison by adopting the manufacturing process of the present invention, and to eliminate the peeling between raw plates of the channel box.

### BRIEF DESCRIPTION OF THE DRAWINGS

Fig. 1 is a flow chart showing a process of manufacturing a Zr-containing Gd alloy plate;
Fig. 2 is a diagram showing the dependence of a neutron energy on an absorption cross-section of plutonium as compared with that of uranium;
Fig. 3 is a diagram showing a relationship between the thickness of a plate made from a Zr-containing Gd alloy and the content of Gd in the Zr-containing Gd alloy;
Fig. 4 is a diagram showing a relationship, obtained by a hot-forging ability test, between a forging temperature and a flow stress of each of Zr-containing Gd alloys different in content of Gd;
Figs. 5a and 5b are diagrams each showing a relationship between the content of Gd and the tensile strength at room temperature;
Fig. 6 is a diagram showing a relationship between the content of Gd and the tensile strength at 288°C;
Fig. 7 is a diagram showing a relationship between the content of Gd and an average linear expansion coefficient;
Fig. 8 is a diagram showing a relationship between a thermal stress and the content of Gd;
Fig. 9 is a diagram showing a process of manufacturing a composite plate in which a Zr-containing Gd alloy plate is incorporated in a Zr alloy plate;
Fig. 10 is a diagram showing another process of manufacturing a composite plate in which a Zr-containing Gd alloy plate is incorporated in a Zr alloy plate;
Fig. 11 is a perspective view of a fuel assembly in which a composite plate including a Zr-containing Gd alloy plate incorporated in a Zr alloy plate is applied to a fuel channel box;
Fig. 12 is a sectional view of a fuel assembly of the present invention;
Fig. 13 is a view showing a configuration of an apparatus for heat-treatment of a channel box;
Figs. 14a and 14b are a perspective view and a sectional view showing a channel box, respectively.
Figs. 15a, and 15b and 15c are a perspective view showing another channel box and two sectional views showing different cross-sections of the channel box, respectively;
Fig. 16 is a perspective view of a further channel box;
Fig. 17 is a sectional view of a fuel rod;
Fig. 18 is a partial sectional view of a fuel rod;
Fig. 19 is a partial sectional view of a water rod;
Fig. 20 is a partial sectional view of another water rod;
Fig. 21 is a sectional view of a fuel assembly of the present invention;
Fig. 22 is a sectional view of another fuel assembly of the present invention;
Fig. 23 is a sectional view of a further fuel assembly of the present invention;
Fig. 24 is a sectional view of a further fuel assembly of the present invention;
Fig. 25 is a flow chart showing steps of manufacturing a composite member of the present invention; and
Fig. 26 is a flow chart showing manufacturing steps subsequent to those shown in Fig. 25.

### DETAILED DESCRIPTION OF THE PREFERRED EMBODIMENTS

Hereinafter, preferred embodiments of the present invention will be described with reference to the accompanying drawings.

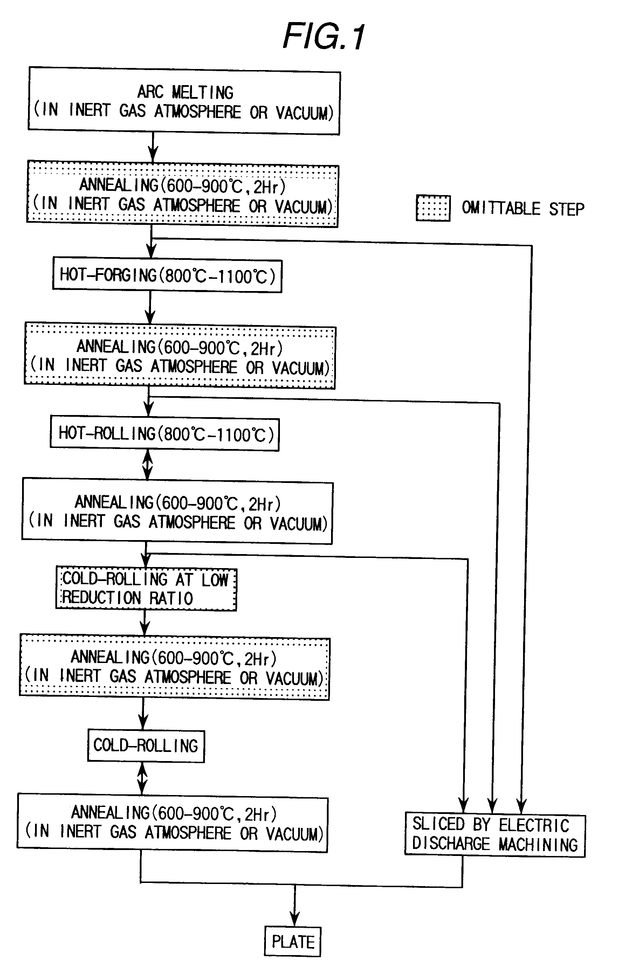

A process of manufacturing a Zr-containing Gd alloy plate in an embodiment of the present invention will be described with reference to Fig. 1. First, an ingot of a Zr-containing Gd alloy was prepared by consumable electrode type arc-melting in an inert gas or vacuum. The ingot was hot-forged at such a temperature as to cause a rapid reduction in flow stress of the alloy in a range of 800 to 1100°C. In addition, the above temperature was previously determined on the basis of the results of a hot-forging ability test. The ingot thus hot-forged was annealed in an inert gas or vacuum at a re-crystallization temperature of 600 to 900°C for 2 hours. The resultant product was suitably repeatedly subjected to hot-rolling at a temperature of 800 to 1100°C and to annealing in an inert gas or vacuum at a re-crystallization temperature of 600 to 900°C for 2 hours, and then subjected to cold-rolling at a low reduction rate of about 10% and to annealing in an inert gas or vacuum at a re-crystallization temperature of 600 to 900°C for 2 hours. After that, the product was suitably repeatedly subjected to cold-rolling at a reduction ratio of about 20 to 30% and to annealing in an inert gas or vacuum at a re-crystallization temperature of 600 to 900°C for 2 hours. Thus, a plate of the Zr-containing Gd alloy, having a specific thickness, was obtained. It should be noted that the annealing after hot-forging, and cold-rolling at a low reduction ratio can be omitted as needed, and that the annealing temperature is changed in a range of 600 to 900°C because the re-crystallization temperature is varied depending on the reduction ratio at the previous rolling step. Further, if it is difficult or unnecessary to carry out hot-forging, hot-rolling, and/or cold-rolling, the steps subsequent to arc melting and annealing, the steps subsequent to hot-forging and annealing, or the steps subsequent to hot-rolling and annealing may be omitted, and the ingot, hot-forged product, or hot-rolled product may be sliced into a plate having a specific thickness by electric discharge machining or the like.

A relationship between characteristics of a Zr-containing-Gd alloy and the content of Gd in the alloy will be described below. A Zr-containing Gd alloy is an eutectic crystal alloy in which Zr and Gd are little dissolved to each other in a solid-state. A Zr-containing Gd alloy, which contains a larger amount of Gd, has a structure in which particles of the Zr phase are dispersed in the Gd phase.

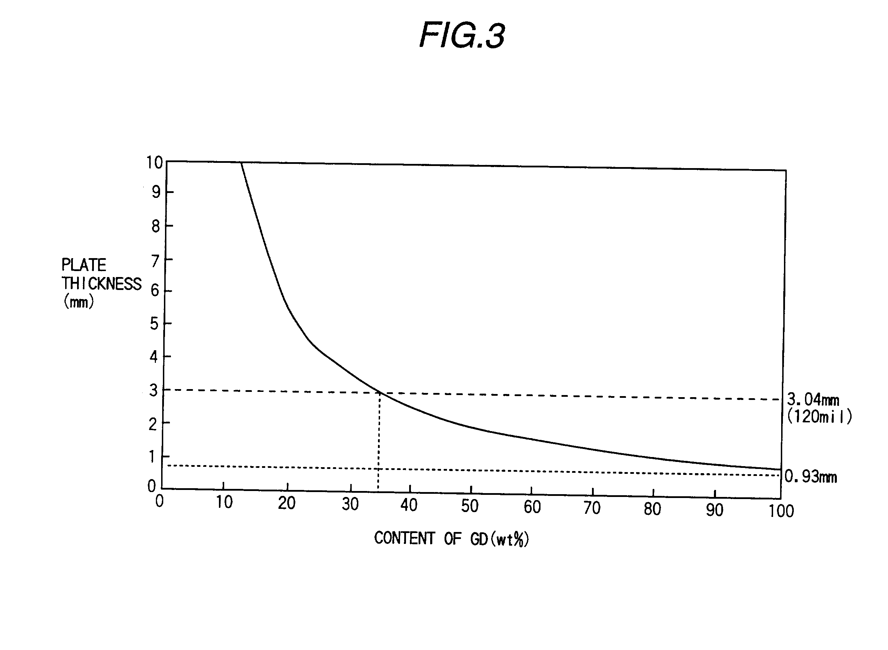

Fig. 3 is a graph showing a relationship between the content of Gd in a Zr-containing Gd alloy and the thickness of a plate made from the alloy. In the nuclear design, the necessary amount of Gd per one channel box for controlling the above-described reactivity is fixed. For example, in the case of arranging a pure Gd plate (width: 34 mm, length: equivalent to the total length of channel box) in a channel box, the thickness of the pure Gd plate is required to be equal to or more than 0.93 mm for ensuring the necessary amount of Gd. With reference to the thickness of the above pure Gd plate, a change in thickness of a Zr-containing Gd alloy plate depending on the content of Gd was calculated. The results are shown in Fig. 3. It should be noted that a thickness of a Zr-containing Gd alloy plate is determined in a condition that the alloy contains as the same number of Gd atoms as those contained in the pure Gd plate having a thickness of 0.93 mm. As is apparent from the results shown in Fig. 3, the critical content of Gd in the Zr-containing Gd alloy plate is about 34 wt% in consideration of the fact that the maximum thickness of the existing channel box is about 3 mm.

In integration of a Zr-containing Gd alloy plate with a Zr alloy plate by hot-rolling, it may be desirable from viewpoint of manufacturing ability that a reduction in thickness of the Zr-containing Gd alloy plate be equal to that of the Zr alloy plate.

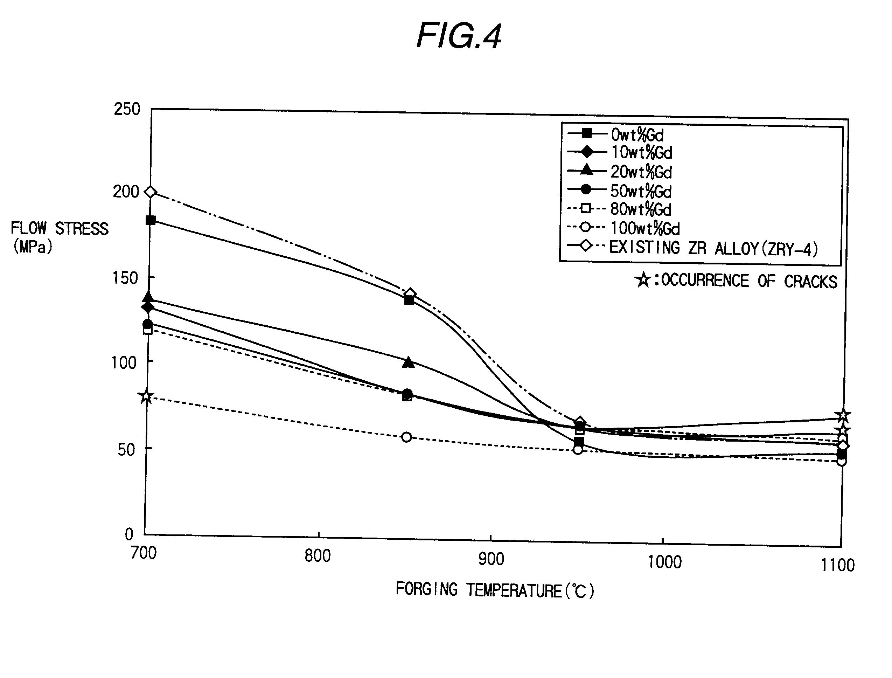

Fig. 4 shows results of a hot-forging ability test in which the flow stress of each of Zr-containing Gd alloys different in content of Gd is measured at each of variable forging temperatures. The results of Fig. 4 show that the Zr-containing Gd alloy in which the content of Gd is in a range of 50 to 80 wt% is not cracked in the entire forging temperature range, that is, such an alloy exhibits a hot-forging ability equal to or higher than that of the existing Zr alloy. Further, the flow stress of the Zr-containing Gd alloy in which the content of Gd is in a range of 50 to 80 wt% is substantially comparable to that of the existing Zr alloy at a hot-forging temperature of 850 to 1100°C. Therefore, it may be desirable that the above Zr-containing Gd alloy be subjected to hot-forging and hot-rolling at such a temperature range.

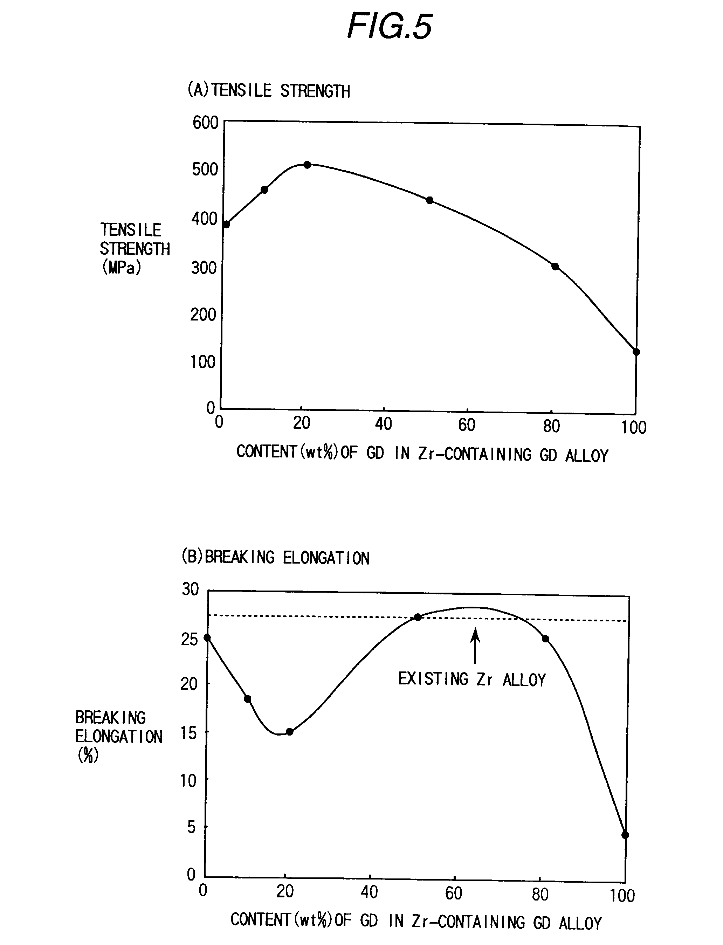

Fig. 5 shows results of a tensile test at room temperature for each of Zr-containing Gd alloys different in content of Gd, which alloy has been quenched from a Zr-β phase temperature range and annealed at 600°C at the final manufacturing step. The results of Fig. 5 show that the Zr-containing Gd alloy is superior to the pure Gd in terms of mechanical characteristics such as strength and ductility. To be more specific, the Zr-containing Gd alloy in which the content of Gd is in a range of 50 to 80 wt% exhibits a ductility nearly equal to that of the existing Zr alloy represented by Zircalloy 4, that is, such an alloy exhibits a cold-workability nearly comparable to that of the existing Zr alloy. In the Zr-containing Gd alloy, the crystal orientation of Zr is made random by quenching; while the crystal structure of Gd is not changed, that is, left as the α-phase by quenching because the transformation temperature of Gd is as high as 1235°C. The degree of the above random crystal orientation of Zr is preferably equal to the degree of crystal orientation of Zr to be described later.

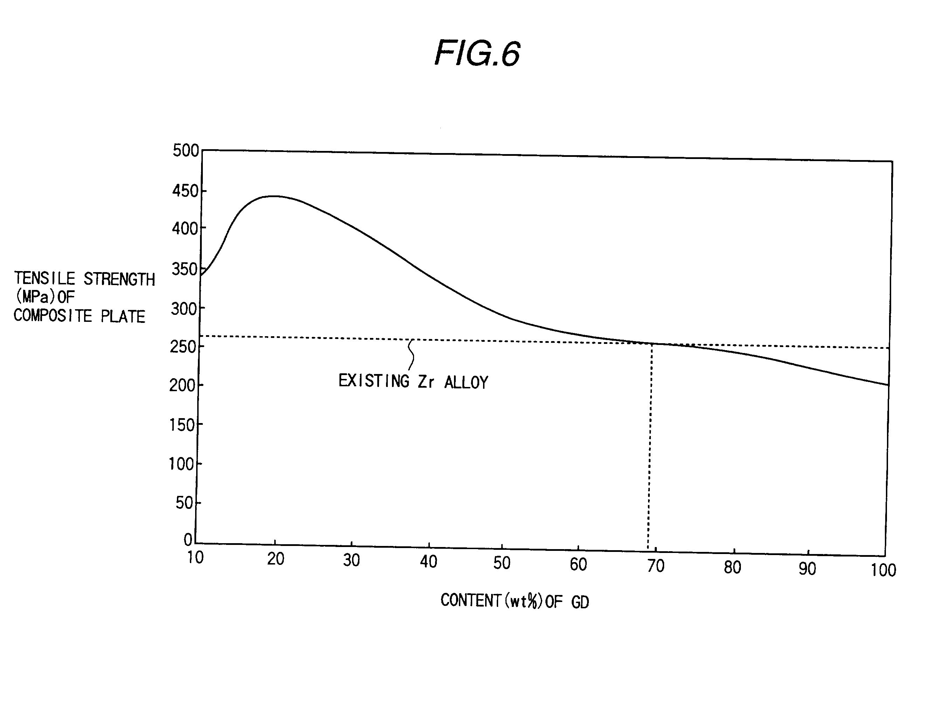

Fig. 6 shows a relationship between the content of Gd in a Zr-containing Gd alloy plate of a composite plate (thickness: 120 mm) and the strength of the composite plate at 288°C. In addition, the above composite plate has been quenched from a Zr-β phase temperature range and annealed at 600°C. The results of Fig. 6 show that the composite plate, in which the plate made from a Zr-containing Gd alloy (content of Gd: about 70 wt% or less) is incorporated in a Zr alloy plate, has a mechanical strength equal to or more than that of the plate of the existing Zr alloy represented by Zircalloy 4.

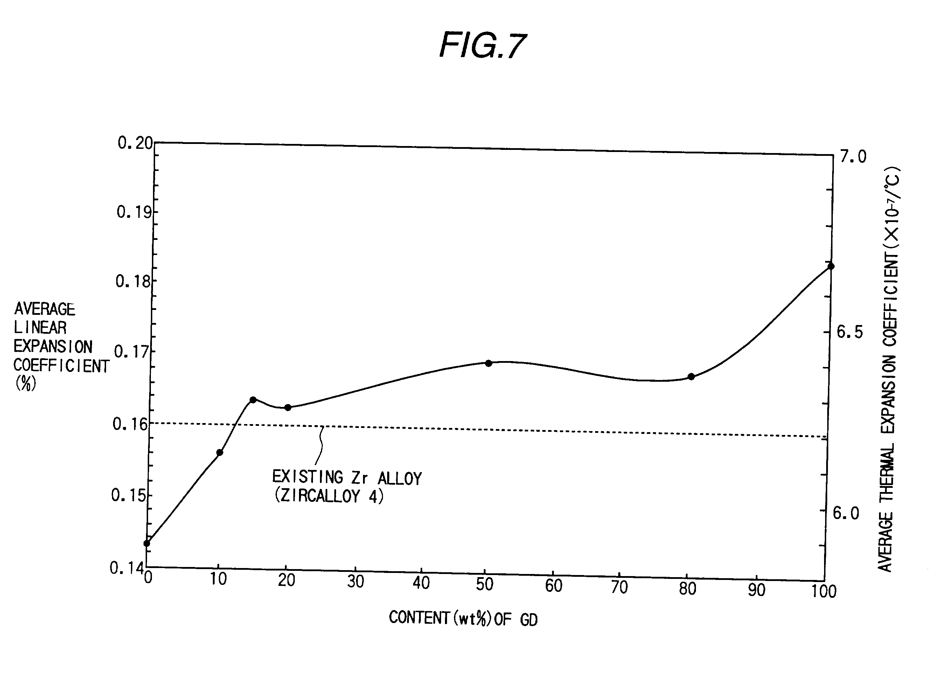

Incidentally, a thermal stress occurs at a portion near the junction interface of the composite plate in the period of a stay in a reactor due to a difference in thermal expansion between a Zr alloy plate and a Zr-containing Gd alloy plate. Fig. 7 shows results of measuring, in a temperature range of room temperature to 300°C, an average linear expansion coefficient of each of Zr-containing Gd alloys different in content of Gd, which alloy has been quenched from a Zr-β phase temperature range.

As shown in Fig. 7, the necessary content of Gd in the Zr-containing Gd alloy for keeping the average linear expansion coefficient of the Zr-containing Gd alloy in a range of 0.16 to 0.18% (the average linear expansion coefficient of the existing Zr alloy represented by Zircalloy 4: 0.16%) is in a range of 20 to 99 wt%. In addition, the average thermal expansion coefficient of the Zr-containing Gd alloy in which the content of Gd is in the above range is in a range of 6.2 to 6.6×10⁻⁷/°C.

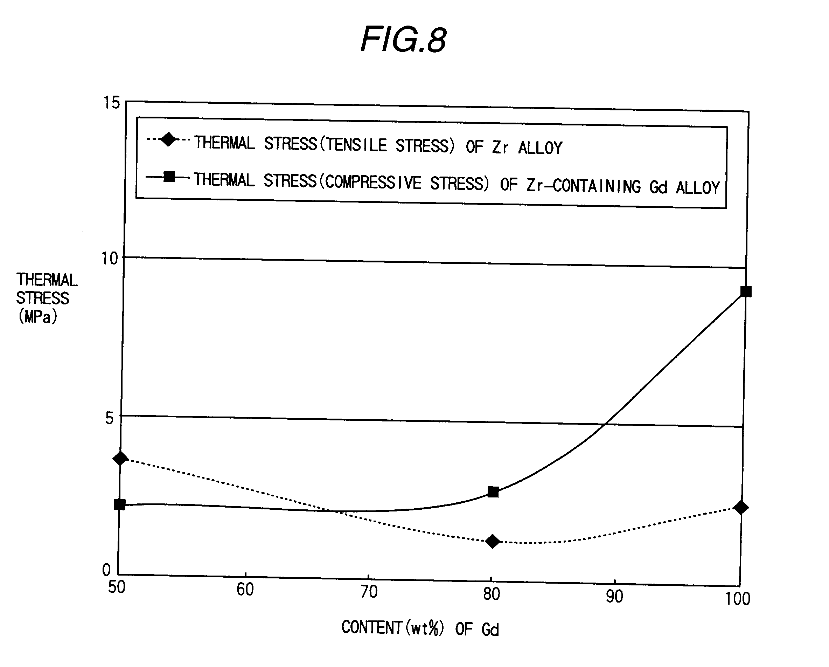

Fig. 8 shows a relationship between a stress generated at 288°C in a composite plate (120 mm) in which a Zr-containing Gd alloy plate is incorporated in a Zr alloy plate and the content of Gd in the alloy of the Zr-containing Gd alloy plate. With respect to the above stress, a tensile stress is generated on the Zr alloy plate side and a compressive stress is generated on the Zr-containing Gd alloy plate side because of a difference in thermal expansion between both the plates. As is apparent from Fig. 8, when the content of Gd in the Zr-containing Gd alloy is more than 80 wt%, the stress generated on the Zr-containing Gd alloy plate side is rapidly increased; however, such a rapidly increased stress is smaller than a critical value causing a practical problem.

Incidentally, as described above, since the corrosion resistance of a Zr-containing Gd alloy is significantly poor, there is a possibility that Gd is diffused from the interior of the channel box during use of the channel box and reaches the outer surface of the channel box to degrade the corrosion resistance of the channel box. In this regard, the thinner the thickness of the Zr-containing Gd alloy plate gets, the more the time required for diffusion of Gd up to the outer surface of the channel box takes, and accordingly, it is advantageous to increase the content of Gd in the Zr-containing Gd alloy plate because such a plate can be thinned.

From the above description, it is revealed that the optimum content of Gd in a Zr-containing Gd alloy is in a range of 50 to 90 wt%. It should be noted that the above optimum content of Gd is dependent on the dimension and location of the Zr-containing Gd alloy plate.

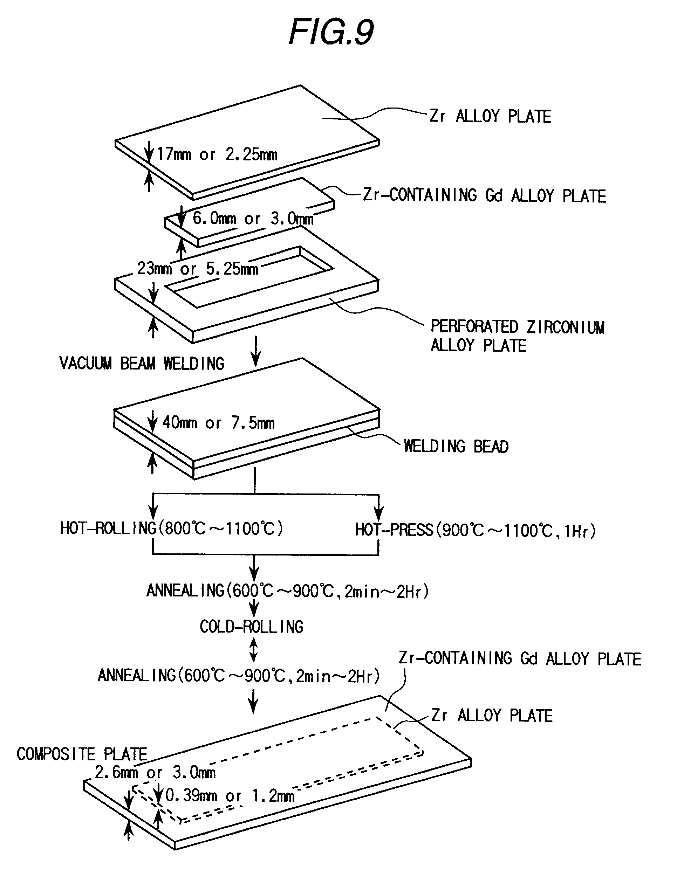

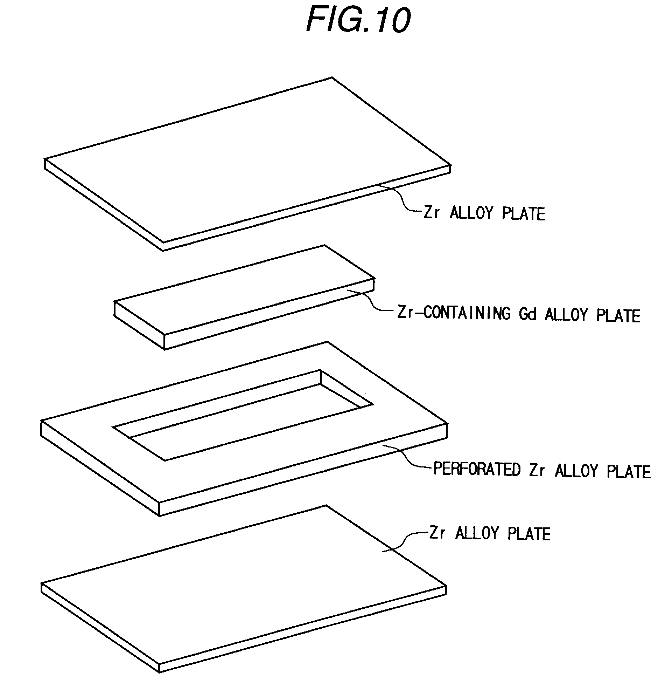

Figs. 9 and 10 each show a process of manufacturing a composite plate in which a Zr-containing Gd alloy plate obtained in accordance with the present invention is incorporated in a plate made from a Zr alloy containing 1.50 wt% of Sn, 0.25 wt% of Fe, 0.10wt% of Cr, and 10 wt% of NiO, or containing 1.50 wt% of Sn, 0.21 wt% of Fe, and 0.10 wt% of Cr. The manufacturing process shown in Fig. 9 will be first described. A plate made from a Gd alloy containing 15 to 20 wt% Zr was fitted into a hole formed in a Zr alloy plate, and was then covered with a Zr alloy plate. The upper Zr alloy plate and the lower perforated Zr alloy plate incorporated with the Zr-containing Gd alloy plate were joined to each other by vacuum beam welding, and were then hot-rolled at a temperature range of 800 to 1100 °C, preferably, 800 to 1000°C, to thus perfectly join the upper and lower Zr alloy plates to the Zr-containing Gd alloy plate. The alloy plates thus joined were annealed at a re-crystallization temperature ranging from 600 to 900°C for 2 minutes to 2 hours, and then suitably repeatedly subjected to cold-rolling and annealing into a specific thickness. The above hot-rolling may be replaced with diffusion junction by hot-pressing. In this case, the previous vacuum beam welding step may be omitted. The hot-pressing is preferably performed in vacuum or an inert gas atmosphere at a pressure of 980 MPa and a junction temperature of 900 to 1100°C for a junction temperature holding time of 1 hour. In the example shown in Fig. 9, only one Gd alloy plate is incorporated in the Zr alloy plates; however, it may be desirable to incorporate two or three pieces or more, preferably, four pieces of Gd alloy plates widthwise in the Zr alloy plates.

In the manufacturing process shown in Fig. 10, a Zr-containing Gd alloy plate is fitted in the above perforated Zr alloy plate, which is then sandwiched between Zr alloy plates. The subsequent manufacturing steps are the same as those shown in Fig. 9. Even in this case, two or three pieces or more, preferably, four pieces of Gd alloy plates can be incorporated in the Zr alloy plates.

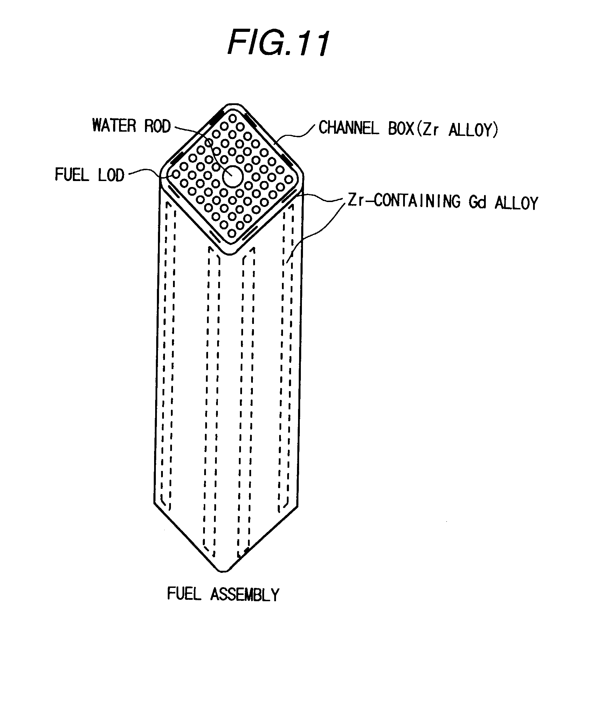

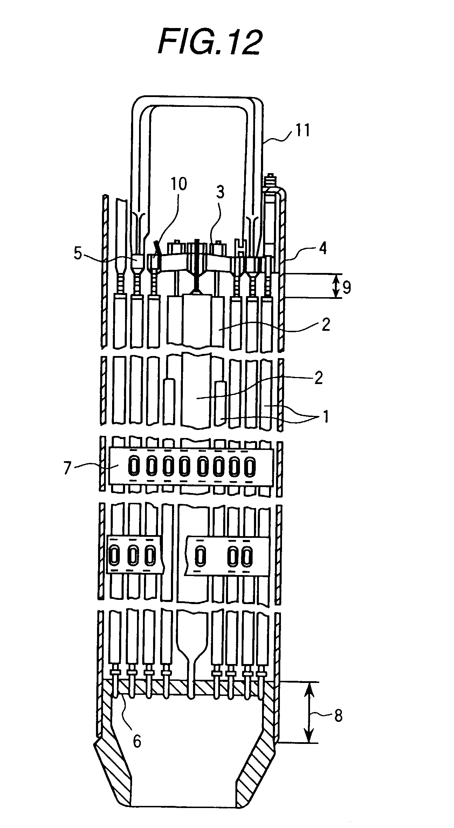

Figs. 11 and 12 each show an example in which the composite plate manufactured as described above is applied to a fuel assembly. In the example shown in Fig. 11, the composite plate is applied to a fuel channel box of the fuel assembly. As shown in Fig. 11, eight pieces of the Zr-containing Gd alloy plates are buried in four surface portions (two pieces for each surface portion) of the channel box. To be more specific, each Zr-containing Gd alloy plate is longitudinally buried in the surface portion of the channel box over a central region (excluding the end portions) having a length equivalent to 94% of the overall length of the channel box at a position near each of four corners of the channel box. By use of the channel box having such a structure, as described above, it is possible to suppress the local peaking factor of the corner portion of the channel box at which a thermal neutron flux is relatively high, and to suitably suppress the excess reactivity at the initial stage of operation of the nuclear reactor without addition of a burnable poison in the fuel.

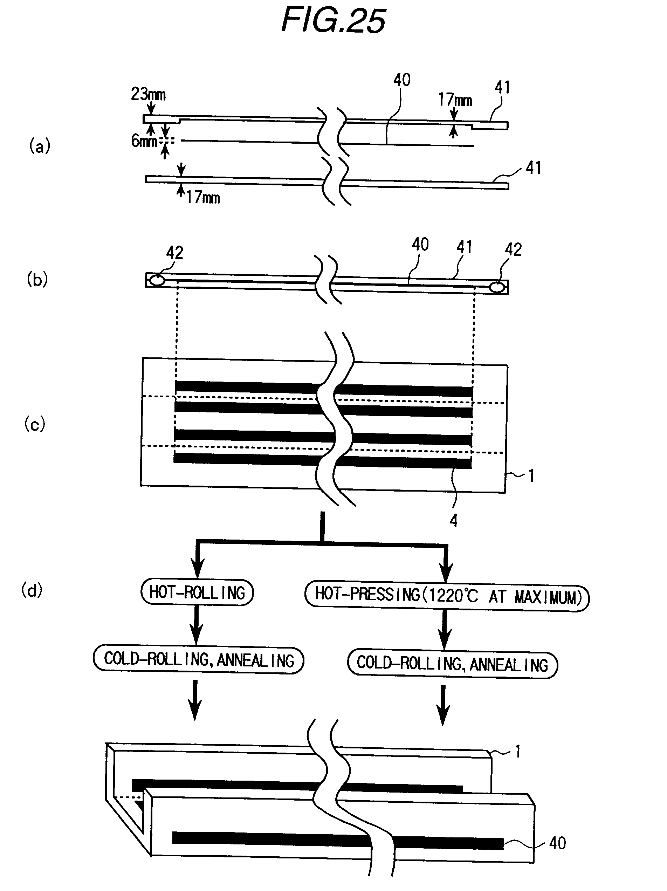

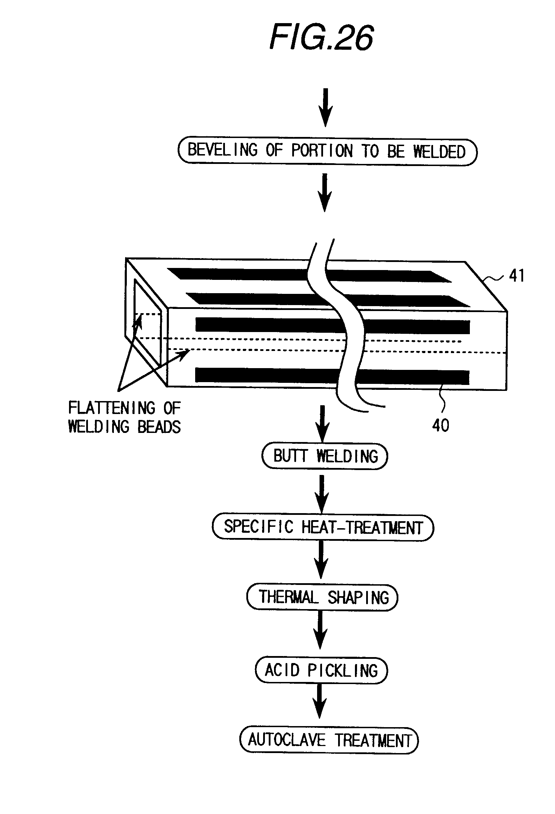

In this embodiment, the composite plate in which four pieces of the Gd alloy plates were incorporated was manufactured in accordance with the process shown in Fig. 9 or 10. The composite plate was then bent along two longitudinal line portions incorporated with no Gd alloy, to be thus formed into a U-shape. Two pieces of the composite plates thus U-shaped were butted to each other, and were integrated with each other by welding the butted portions incorporated with no Gd alloy plate. The concrete process is the same as that to be described later with reference to Figs. 25 and 26.

Fig. 12 is a sectional view of a fuel assembly, used for a boiling water reactor (BWR), using a composite plate of the present invention.

The BWR fuel assembly includes, as shown in Fig. 12, a number of fuel rods 1, a plurality of stages of spacers 7 for holding the fuel rods 1 at specific intervals, a square-cylindrical channel box 4 for containing the fuel rods 1 and the spacers 7, upper and lower tie plates 5 and 6 for holding both ends of the fuel rods 1 including fuel cladding tubes filled with fuel pellets; water rods 2 arranged at the central portion of the spacers 7; and a handle 11 for carrying the entire fuel assembly. Such a fuel assembly can be assembled in accordance with the usual process.

The channel box 4 contains the fuel rods 1 and the water rods 2 which are integrated with each other by the fuel spacers 7, with the upper and lower tie plates 5 and 6 fixed by the water rods 2. The square-cylindrical channel box 4 is obtained by joining two-divided U-shaped plates to each other by plasma welding. The channel box 4 is adapted to rectify steam generated from the surfaces of the fuel rods and high temperature water flowing between the fuel rods upon operation of the plant, and to forcibly introduce the steam and high temperature water upwardly. The channel box 4 is used for a long-period of time in a state of being applied with a stress acting to spread the square cylinder outward because the inner pressure of the channel box is slightly higher than the external pressure.

The fuel assembly of the present invention is configured such that three pieces of the water rods 2 are symmetrically arranged at the central portion of the spacers 7 with both ends thereof fixed by means of tie plates 5 and 6, and the channel box 4 is fixedly screwed in the upper tie plate 5. The entire fuel assembly can be carried by means of the handle 11. In this embodiment, the fuel rods are not fixed to the tie plates.

The channel box was heated in a β-phase temperature range of the Zr alloy, preferably, in a range of 1,000 to 1,100°C and was then quenched by water cooling. With this heat-treatment, the average crystal grain size of β Zr crystals becomes a value in a range of 50 to 300 µm, preferably, 100 to 200 µm, and also the crystal orientation of β Zr crystals is made random. This is effective to significantly prevent irradiation elongation and hence to prevent interference between the channel box and the control rod. In particular, for the above channel box, the crystal orientation is as follows: the value (Fr) in the vertical direction with respect to the plate surface is in a range of 0.20 to 0.50, preferably, 0.26 to 0.40; the value (F1) in the length direction is in a range of 0.25 to 0.36, preferably, 0.31 to 0.35; and the value (Ft) in the peripheral direction is in a range of 0.25 to 0.36, preferably, 0.31 to 0.35.

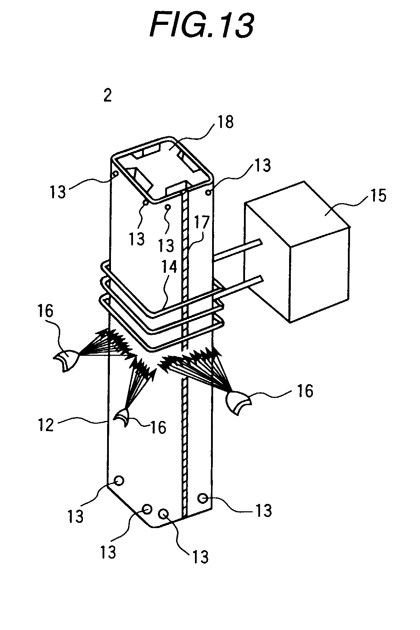

Fig. 13 is a perspective view showing one example of heat-treatment for a channel box according to the present invention. In this example, a plate made from a Zr alloy containing 50 wt% of Gd was used in place of the above-described composite plate. The plate was formed into a U-shape by cold-bending, to prepare a U-shaped member (length: 4 m). Two pieces of the U-shaped members were joined to each other by laser welding or plasma welding, to obtain a square cylinder 12. The welded portion of the square cylinder 12 was flattened by removing irregularities on the welded portion. The square cylinder 12 as shown in Figs. 11 and 13 was heated in a β-phase temperature range by high frequency induction heating, and was quenched by cooling water sprayed through a water spray nozzle 16 provided directly under a high frequency induction heating coil 14. The square cylinder 12 was allowed to pass through the coil 14 from top to bottom at a specific speed, so that the entire square cylinder 12 was uniformly heat-treated. The feed speed of the square cylinder 12 and the output of a high frequency power supply 15 were adjusted such that the heating temperature was set, preferably, at 1100°C or less and the holding time at a temperature of 980 °C or more was set at 10 seconds or more. After heat-treatment, a test piece (width: 40 mm, length: 40 mm) was cut off from the square cylinder 12 for measurement of an F value. The heat-treatment was performed with both ends of the cylinder 12 fixed to an austenite stainless steel made mandrel 18 by means of screws 3. The orientation of crystal grains of the Zr alloy of the square cylinder 12 after heat-treatment was not specified in this embodiment having the above-described specific values, that is, nearly random crystal orientation. The average crystal grain size of β Zr crystals of the Zr alloy of the square cylinder 12 was about 100 µm. After the heat-treatment, the cylinder 12 was highly accurately shaped, followed by sand-blasting and acid pickling to remove oxides on the surface of the cylinder 12, and were then subjected to autoclave treatment using steam.

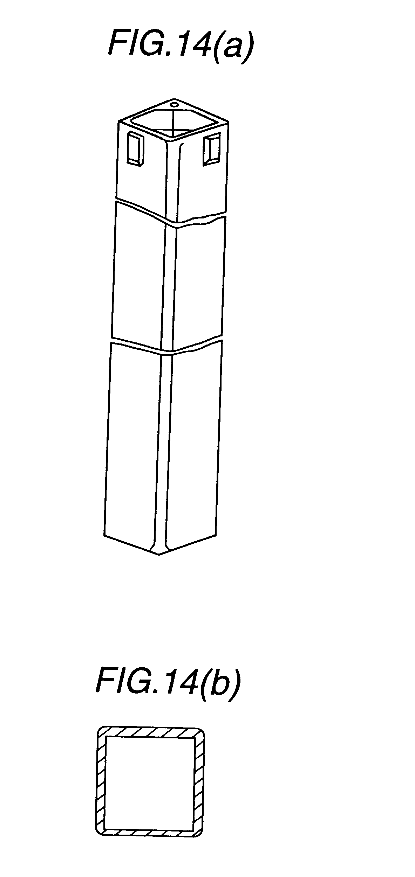

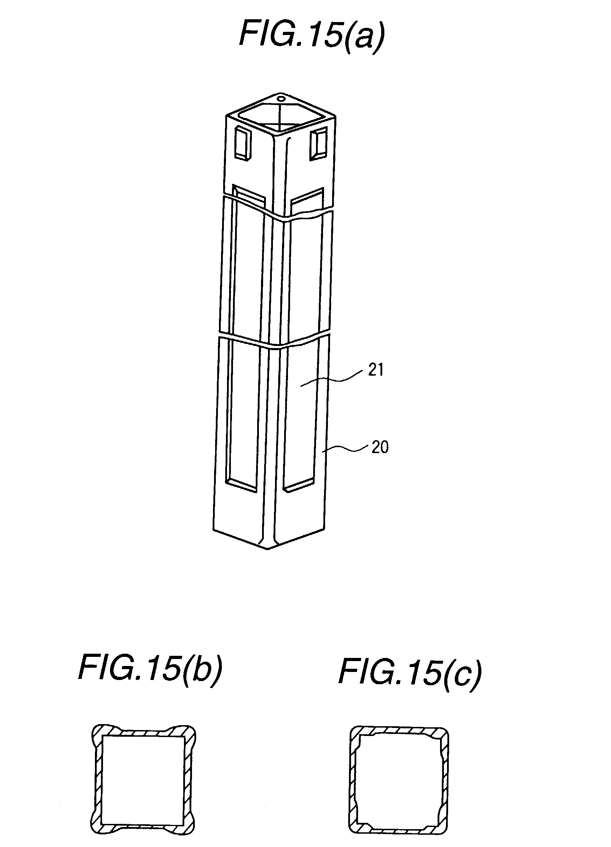

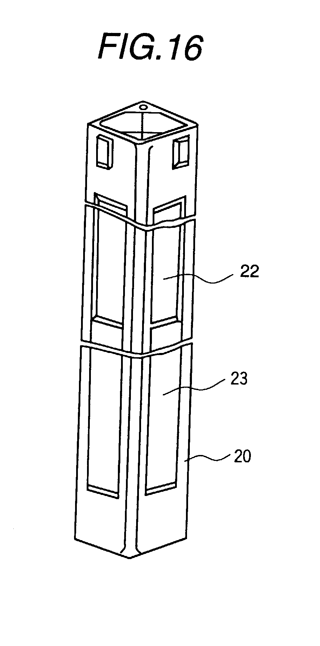

Figs. 14 to 16 are perspective views showing channel boxes of the present invention, which have various sectional structures and are formed of the above-described composite plate and the plate made from the Zr alloy containing Gd. In this embodiment, the channel box shown in Fig. 14 has a sectional structure with a specific thickness; the channel box shown in Fig. 15 has a sectional structure in which a side portion is inwardly or outwardly recessed such that the thickness thereof is thinner than that of a corner portion; and the channel box shown in Fig. 16 has a sectional structure having a longitudinal thickness distribution in which a corner portion 20 is thicker than the side portion 21 and an upper portion 22 of the side portion 21 is thinner than a lower portion 23 of the side portion 21. Such shaping of the channel box is performed after heat-treatment by chemical etching using a mixed acid solution of hydrogen fluoride and nitric acid with a mask put on a portion not to be etched, or by machining. In this embodiment, the outer surface side of the square cylinder 12 is recessed; however, the wall thickness distribution may be reversed, that is, the inner surface side of the square cylinder 12 may be recessed.

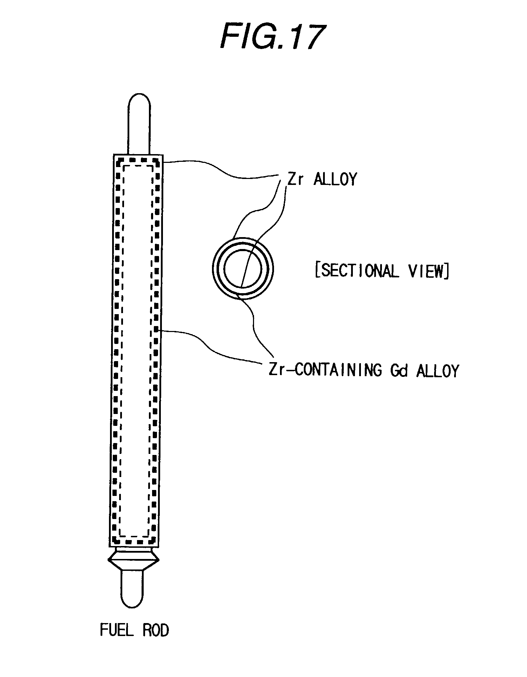

Fig. 17 shows one embodiment in which the composite plate of the present invention is applied to a fuel rod in a fuel assembly. The fuel rod is generally composed of a Zr alloy made fuel cladding tube filled with fuel pellets, and in this embodiment, as shown in Fig. 17, the above-described Zr-containing Gd alloy plates are buried in the fuel cladding tube made from the Zr alloy. These fuel rods are densely arranged in the vicinity of each of four corners of the fuel assembly. As a result, there can be obtained the same effect as that described above. The fuel rod can be manufactured in the same process as the prior art one by use of the composite plate in which the Zr-containing Gd alloy plates are incorporated in the Zr alloy plates, or by use of a composite tube in which a Zr-containing Gd alloy tube is directly integrated with a Zr alloy tube. The composite tube is manufactured by a method in which a raw composite tube is prepared by hot-extrusion and is repeatedly subjected to cold-working using a Pilger rolling mill and to annealing. Also, the composite plate can be applied to a water rod or a control rod in accordance with the requirement for nuclear design. In the example shown in Fig. 17, the Gd alloy plates each being formed into a ring-shape are arranged in the Zr alloy tube; however, a plurality of the Gd alloy plates each being formed into a strip-shape may be arranged in the Zr alloy tube in such a manner as to be spaced at equal intervals in the circumferential direction and to extend in the length direction.

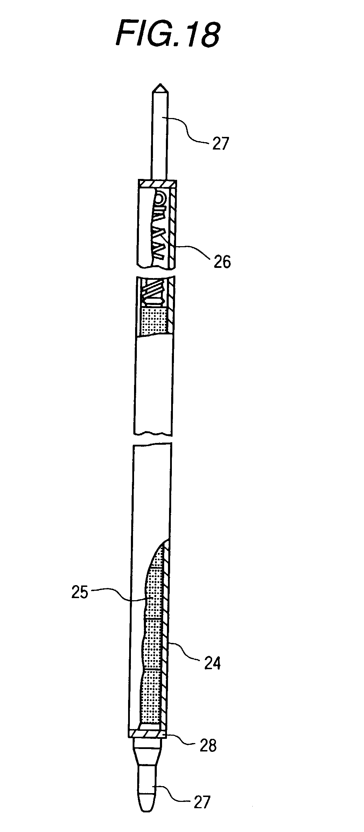

Fig. 18 is a partial sectional view of the fuel rod including the cladding tube using the composite plate of the present invention shown in Fig. 17. The fuel rod is composed of a cladding tube 24, fuel pellets 25, end plugs 27, and a plenum spring 26. The fuel rod is filled with He, at a pressure of 15 to 25 atm in this embodiment. The cladding tube 24 is manufactured as follows. A pure Zr liner is integrally provided on the inner side of the cladding tube 24. The liner is prepared at the following step of forming a raw tube after heat-treatment, and is then subjected to cold-rolling and annealing.

A rod was formed into a tube (outside diameter: 63.5 mm, thickness: 10.9 mm) by hot-extrusion. The raw tube thus obtained was heated by allowing it to pass through a high frequency induction heating coil while allowing water to flow from bottom to top in the tube, and was quenched by spraying water on the outer surface of the tube from a nozzle provided directly under the coil. The maximum heating temperature was set at 930°C, and an average cooling rate in a temperature region of 930 to 500°C was set at about 150°C/s. The raw tube, which has been subjected to high frequency quenching, was cold-rolled by a Pilger rolling mill, and annealed in vacuum at 600°C. The cold-rolling and annealing were alternately repeated three times (final annealing temperature: 577°C), to obtain each of tubes used for a fuel cladding tube and a round type spacer. For preparation of the tube for a spacer, the raw tube was heated in a state in which water was not allowed to flow in the tube. The fuel cladding tube is different from the spacer in diameter and thickness. Two kinds of the tubes different in diameter and thickness for the cladding tube and spacer were manufactured by changing the reduction ratio upon final cold-rolling. The spacer is larger in outside diameter and smaller in thickness than the cladding tube. The reduction ratio in cross-section upon cold-rolling was set at 70 to 80% for each cold-rolling. The thickness of the liner is in a range of about 10 to 100 µm. The inner side of the cladding tube has a specific crystal orientation, specifically, Fr value in a range of 0.6 to 0.7.

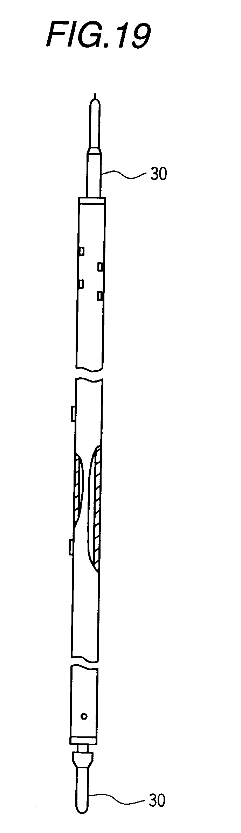

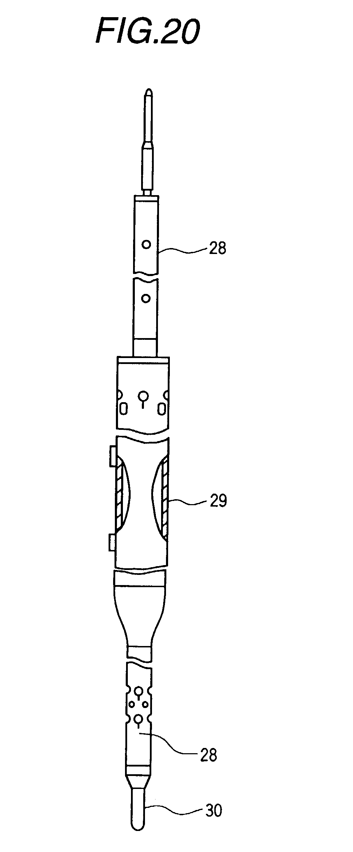

Figs. 19 and 20 are partial sectional views each showing a water rod. In this embodiment, there is adopted the water rod having a large diameter shown in Fig. 20, to which the above-described composite member shown in Fig. 17 or the integrated alloy member is applied. Like the above manufacturing steps for the cladding tube, a raw tube was repeatedly quenched and was then cold-rolled and annealed into a specific shape, to thus obtain a water rod which has a small-diameter portion 28, a large diameter portion 29, and end plugs 30. The end plugs 30 are provided with screws, and are fixed to the upper and lower tie plates by means of the screws, as described above.

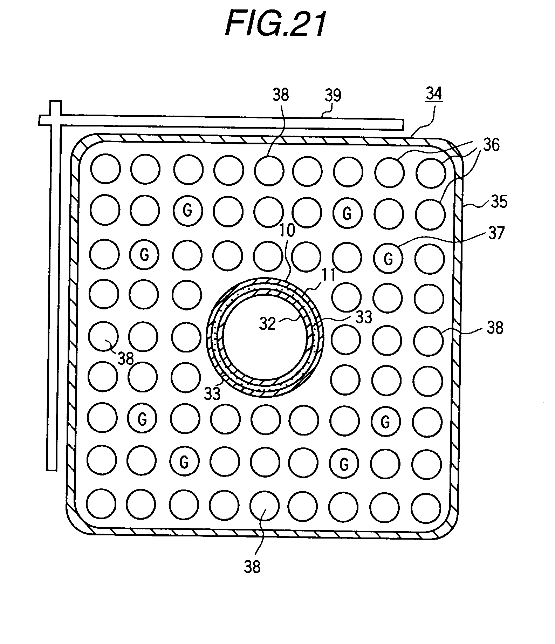

One basic structure of a fuel assembly for a boiling water reactor (BWR) will be described with reference to Fig. 21. In a fuel assembly, fuel rods each filled with a fissile material (pellets of low grade-enriched uranium oxide or the like) and a circular tube-like moderator rod (water rod) are bundled by means of spacers with lateral intervals between these rods held; upper and lower ends of these rods are held by means of upper and lower tie plates, respectively; and the above components are surrounded by a channel box. A cross-shaped control rod is arranged at the center surrounded by four pieces of the fuel assemblies.

To be more specific, a fuel assembly 34 in this embodiment is configured such that fuel rods 36 filled with pellets of a fissile material, burnable poison (gadolinia) containing fuel rods 37 (particularly, designated by character G in the figure), and a burnable poison containing moderator rod 10 are bundled, and the bundled rods are surrounded by a channel box 35. The moderator rod 10 has a double-tube structure of an outer tube 31 having the outside diameter of about 40 mm and an inner tube 32.

Each of the inner tube 31 and the outer tube 32 is formed of the above-described composite tube in which the Gd alloy plates are incorporated in the Zr alloy tube shown in Fig. 17. A ring-shaped portion 33 is made from a Zr alloy containing boron or a boride (for example, boron carbide or zirconium boride) or made from aluminum oxide.

The moderator rod 10 has, near its lower end, openings through which a coolant is introduced into the inner tube 32 and it also has, near its upper end, openings through which a coolant is discharged from the inner tube 32. The number and the diameter of the openings are set to prevent boiling of coolant in the moderator rod 10.

When a burnable poison containing member is made from a Zr alloy, the composition of the burnable poison is, for example, set such that the content of Gd is about 20 wt% and the content of boron (B) is about 0.5 wt%. When the burnable poison containing member is not made from a Zr alloy or the burnable poison is added not singly but in the form of a compound, the content of each of the burnable poison elements (Gd and B, in this case) may be set at a value substantially equal to the absolute amount of the element.

The moderator rod 10 is positioned such that the ring-shaped portion 33 formed between the outer tube 31 and the inner tube 32 is symmetric with respect to a diagonal line extending from the control rod 39 side.

Four pieces of the fuel rods 38 are arranged at the outermost peripheral portion at which the local power becomes larger in the unburned state. In this fuel rod 38, the surface of each fuel pellet is coated with gadolinia or zirconium boride as a burnable poison, wherein the thickness of the coating film (about 1.5 µm) is determined such that the reactivity of the poison in the fuel rod 38 disappears earlier than the reactivity of a burnable poison contained in the moderator rod 10 does. In place of the fuel rod in which the surface of each fuel pellet is coated with a burnable poison, there may be used a fuel rod filled with fuel pellets added with a slightly enriched (about 0.5 to 3%) gadolinia.

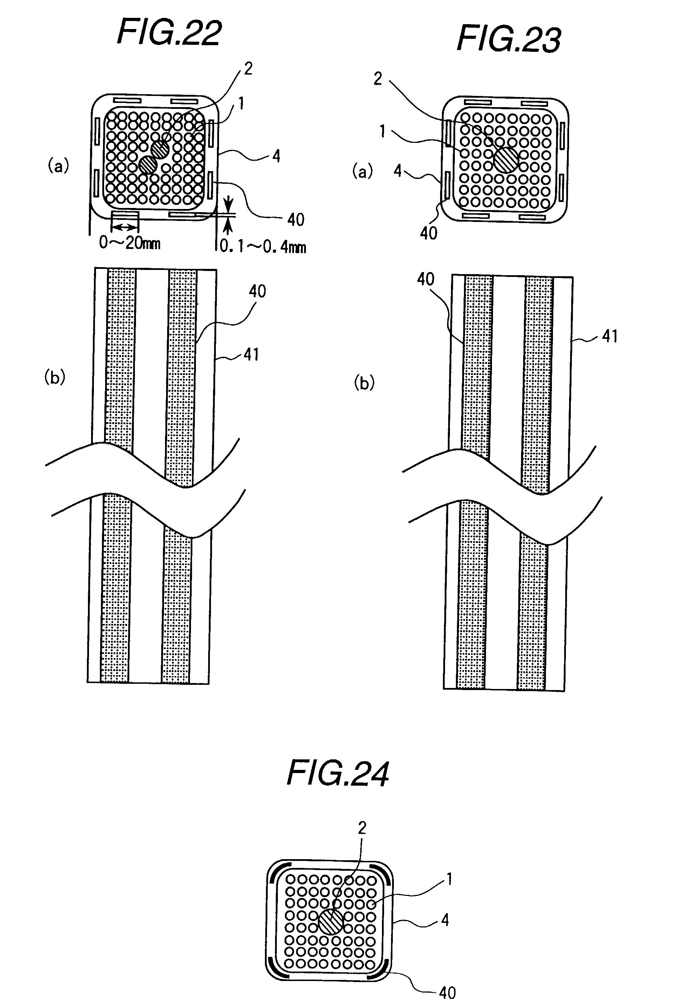

Figs. 22 and 23 show another embodiment of the fuel assembly of the present invention. In each figure, the cross-section (a) seen from the longitudinal direction of a channel box is shown on the upper side, and the side view (b) seen from the longitudinal direction of the channel box is shown on the lower side. As shown in the figures, a MOX fuel assembly A includes a channel box 4, a bundle of a large number of fuel rods 1, water rods 2 (Fig. 22) or a water rod 2 (Fig. 23), and BP members 40 containing a burnable neutron absorbing poison which are arranged in four side surface portions of the channel box 4. The BP members 40 are buried in the longitudinal direction in the vicinity of corners of the four side surface portions of the channel box 4. The fuel assembly shown in Fig. 22 has two pieces of the water rods 2, and the fuel assembly shown in Fig. 23 has one piece of the water rod 2. The structure of the fuel assembly shown in Fig. 22 is the same as that of the fuel assembly shown in Fig. 23 except for the number of the water rod(s). In a fuel assembly shown in Fig. 24, the BP members 40 are buried in the longitudinal direction at corners of the four side surface portions of the channel box 4. The MOX fuel is composed of an uranium 238 fuel containing 1.5 to 10 wt% of Pu. It may be desirable that the MOX fuel containing a larger amount of Pu be disposed on the inner side of the channel box and the MOX fuel containing a smaller amount of Pu be disposed on the outer side of the channel box. In this embodiment, the BP member 40 extends throughout the overall length of the channel box, and the exposed portion of the BP member 40 is coated with an anti-corrosion metal.

Since the BP members 40 buried in the channel box 4 is not in direct-contact with core water, it is possible to prevent occurrence of crevice corrosion, galvanic corrosion, and the like between the channel box 4 and the BP members 40.

Further, the arrangement of the BP members 40 at the corners or in the vicinity of the corners of the channel box 4 makes it possible to effectively suppress the local peaking factor at the corners of the fuel assembly.

Fig. 24 is a sectional view of the BWR fuel assembly using the channel box incorporated with the composite members of the present invention. In this embodiment, the plates made from the above-described Gd alloy containing 20 wt% of Zr are buried at the corners of the channel box made from Zircalloy 4 in accordance with the same manner as that described above.

Figs. 25 and 26 show a process of manufacturing the channel box of the fuel assembly in the embodiment shown in Figs. 22 to 24. First, at the step (a) shown in Fig. 25, a raw plate of Zircalloy 4 forming the channel box was processed to form recesses each having a depth of about 60mm in the longitudinal direction of the plate; BP members 40 each having a size corresponding to that of the recess were buried in the recesses; another thin plate of Zircalloy 4 was stuck on the plate incorporated with the BP members 40; and the mating portions of the plates were joined to each other by electron beam welding as shown welding portions 42. After that, the resulting plates were hot-rolled at a temperature ranging from 800 to 1100°C, and then cold-rolled and annealed into a perfect one plate. The cold-rolling and annealing were repeated several times. The above hot-rolling may be replaced with a hot-pressing process in which the above raw two plates are heated at 1220°C at maximum and hot-pressed. If there is no fear of peeling between the two plates, the electron beam welding may be omitted. In particular, the adoption of the hot-pressing process makes higher the possibility of omission of the electron beam welding. The resultant integrated plate was bent into a U-shape. Then, as shown in Fig. 26, two pieces of the U-shaped plates were butted and welded to each other into a rectangular channel box 1. The rectangular channel box 1 was subjected to quenching (heated at a β-phase temperature of the Zr alloy and rapidly cooled), thermal shaping, and autoclave treatment. Thus, the channel box 1 of the present invention was obtained. In addition, Zircalloy 4 is a Zr alloy containing 1.20 to 1.70 wt% of Sn, 0.18 to 0.24 wt% of Fe, 0.07 to 0.13 wt% of Cr, and 0.10 to 0.16 wt% of O2, the balance being Zr.

As is apparent from the above structure, the fuel assembly (MOX fuel assembly) mixed with Pu according to the present invention is able to suitably suppress the excess reactivity without addition of a neutron absorbing material or burnable poison in the fuel rod.

Since any burnable poison is not added in the fuel, the utilization of Pu for a light-water reactor can be realized without reduction in the loaded amount of Pu per fuel assembly.

Also, the fuel assembly of the present invention makes it possible to effectively reduce the local peaking factor at the outer peripheral portion of the fuel assembly without increasing the kinds of enrichment of pellets, and hence to reduce the kinds of enrichment of pellets constituting the fuel assembly.

Since a burnable poison is buried in the channel box, it is possible to prevent occurrence of corrosion of the burnable poison itself, and crevice corrosion and galvanic corrosion between the channel box and the burnable poison, and to prevent elution of the burnable poison in core water because the burnable poison is not in direct-contact with the core water.

Further, according to the present invention, it is possible to form a channel box having a good appearance from which a burnable poison is not exposed, to easily manufacture a channel box buried with a burnable poison, and to eliminate the peeling between raw plates of a channel box.

As described above, the present invention provides a fuel assembly capable of suitably suppressing the excess reactivity in nuclear design without addition of any neutron absorbing material in fuel rods by using as the neutron absorbing material a Zr-Gd alloy containing 20 wt% or more of Gd, the balance being Zr. The present invention also provides a process of manufacturing a Zr-Gd alloy member for absorbing neutrons, which is capable of manufacturing the alloy member in the same procedure as that for manufacturing the existing Zr alloy member.

While the preferred embodiments of the present invention have been described using specific terms, such description is for illustrative purposes only, and it is to be understood that changes and variations may be made without departing from the spirit or scope of the following claims.

## Claims

1. A composite member comprising:
a member made from a zirconium-gadolinium alloy containing gadolinium in an amount of 20 wt% or more; and
a member made from a zirconium alloy higher in corrosion resistance than said zirconium-gadolinium alloy;
wherein said member made from said zirconium-gadolinium alloy is covered with said member made from said zirconium alloy.

2. A composite member comprising:
a member made from a zirconium-gadolinium alloy containing gadolinium in an amount of 20 to 99 wt%; and
a member made from a zirconium alloy higher in corrosion resistance than said zirconium-gadolinium alloy;
wherein said member made from said zirconium-gadolinium alloy is incorporated in said member made from said zirconium alloy.

3. A composite member comprising:
a zirconium-gadolinium alloy having a tensile strength in a range of 92 MPa or more at 288°C or in a range of 200 MPa or more at room temperature; and
a member made from a zirconium alloy higher in corrosion resistance than said zirconium-gadolinium alloy;
wherein said member made from said zirconium-gadolinium alloy is covered with said member made from said zirconium alloy.

4. A composite member comprising:
a member made from a zirconium-gadolinium alloy having an average thermal expansion coefficient in a range of 0.16 to 0.18% at a temperature ranging from room temperature to 300°C; and
a member made from a zirconium alloy higher in corrosion resistance than said zirconium-gadolinium alloy;
wherein said member made from said zirconium-gadolinium alloy is covered with said member made from said zirconium alloy.

5. A fuel assembly comprising:
a plurality of fuel rods each being composed of a cladding tube filled with a nuclear fuel;
a spacer for holding said fuel rods at specific positions;
an upper tie plate and a lower tie plate for supporting upper and lower ends of said fuel rods, respectively;
a water rod arranged in said spacer; and
a channel box for integrally collecting said fuel rods, spacer, tie plates, and water rod and covering the outer peripheries thereof;
wherein at least one of said cladding tube, spacer, water rod, and channel box comprises a composite member including a member made from a zirconium-gadolinium alloy containing gadolinium in an amount of 20 wt% or more, and a member made from a zirconium alloy higher in corrosion resistance than said zirconium-gadolinium alloy, wherein said member made from said zirconium-gadolinium alloy is incorporated in said member made from said zirconium alloy.

6. A fuel cladding tube used for a nuclear reactor, comprising a composite member which includes a member made from a zirconium-gadolinium alloy and a member made from a zirconium alloy higher in corrosion resistance than said zirconium-gadolinium alloy, wherein said member made from said zirconium-gadolinium alloy is incorporated in said member made from said zirconium alloy.

7. A spacer used for a nuclear reactor, comprising a composite member which includes a member made from a zirconium-gadolinium alloy and a member made from a zirconium alloy higher in corrosion resistance than said zirconium-gadolinium alloy, wherein said member made from said zirconium-gadolinium alloy is incorporated in said member made from said zirconium alloy.

8. A water rod used for a nuclear reactor, comprising a composite member which includes a member made from a zirconium-gadolinium alloy and a member made from a zirconium alloy higher in corrosion resistance than said zirconium-gadolinium alloy, wherein said member made from said zirconium-gadolinium alloy is incorporated in said member made from said zirconium alloy.

9. A channel box used for a nuclear reactor, comprising a composite member which includes a member made from a zirconium-gadolinium alloy and a member made from a zirconium alloy higher in corrosion resistance than said zirconium-gadolinium alloy, wherein said member made from said zirconium-gadolinium alloy is incorporated in said member made from said zirconium alloy.

10. A control rod comprising a composite member which includes a member made from a zirconium-gadolinium alloy and a member made from a zirconium alloy higher in corrosion resistance than said zirconium-gadolinium alloy, wherein said member made from said zirconium-gadolinium alloy is incorporated in said member made from said zirconium alloy.

11. A fuel assembly comprising:
a plurality of fuel rods each being composed of a cladding tube filled with a nuclear fuel;
a spacer for holding said fuel rods at specific positions;
an upper tie plate and a lower tie plate for supporting upper and lower ends of said fuel rods, respectively;
a water rod arranged in said spacer; and
a channel box for integrally collecting said fuel rods, spacer, tie plates, and water rod and covering the outer peripheries thereof;
wherein said channel box comprises a composite member including a plurality of strip-shaped members made from a zirconium-gadolinium alloy and a member made from a zirconium alloy higher in corrosion resistance than said zirconium-gadolinium alloy, said plurality of members made from said zirconium-gadolinium alloy being incorporated in the peripheral direction in said member made from said zirconium alloy, wherein said plurality of members made from said zirconium-gadolinium alloy are arranged at a central portion of said channel box over 90% or more of the overall length of said channel box.

12. A plate made from a gadolinium alloy in which crystal grains of zirconium are dispersed.
